(19) Europäisches Patentamt
European Patent Office
Office européen des brevets

(11) EP 2 946 948 B1

(12) **EUROPEAN PATENT SPECIFICATION**

(45) Date of publication and mention of the grant of the patent:
**24.04.2019 Bulletin 2019/17**

(21) Application number: **14757004.8**

(22) Date of filing: **28.02.2014**

(51) Int Cl.:
***B60C 17/00*** *(2006.01)*
***B60C 9/00*** *(2006.01)*
***B60C 15/06*** *(2006.01)*
***D06M 15/55*** *(2006.01)*
***D06M 101/32*** *(2006.01)*
***D06M 101/36*** *(2006.01)*
***B60C 15/00*** *(2006.01)*
***B60C 9/04*** *(2006.01)*

(86) International application number:
**PCT/JP2014/055191**

(87) International publication number:
**WO 2014/133174 (04.09.2014 Gazette 2014/36)**

(54) **PNEUMATIC SAFETY TIRE**

SICHERHEITSLUFTREIFEN

BANDAGE DE SÉCURITÉ DE PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.02.2013 JP 2013039805**

(43) Date of publication of application:
**25.11.2015 Bulletin 2015/48**

(73) Proprietor: **Bridgestone Corporation**
**Tokyo 104-8340 (JP)**

(72) Inventor: **OYAMA Yuji**
**Kodaira-shi**
**Tokyo 187-0031 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**JP-A- 2002 046 411**
**JP-A- 2012 148 661**
**JP-A- 2012 162 230**
**JP-A- 2012 214 136**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 946 948 B1

## Description

TECHNICAL FIELD

The present invention relates to a pneumatic safety tire (hereinafter also simply referred to as "tire").

BACKGROUND ART

As tires which can travel a certain distance safely without losing a load supporting ability even in the state in which the inner pressure of the tire (hereinafter briefly referred to as "inner pressure") is decreased due to a puncture or the like, a variety of safety tires of so-called side reinforced type have been proposed. The safety tires of side reinforced type are tires having a structure in which a side reinforcing rubber layer having a relatively high modulus and having a crescent cross sectional shape is disposed in the inner surface of a carcass in the side wall portion of the tire, thereby improving the rigidity of the side wall portion, and allowing the tire to hold loads without extremely increasing the flexural deformation of the side wall portion when the inner pressure decreases.

Meanwhile, at present, as fiber cords for rubber reinforcement used for a carcass ply member of tires for passenger vehicles for ordinary running, a polyester cord made of polyethylene terephthalate (PET) or the like is widely used in view of high strength per weight and excellent dimensional stability, moisture resistant stability, rigidity, cost performance, and the like. Further, aramid cords are also commonly used.

The documents JP 2012 214136 A (BRIDGESTONE), 8 November 2012 (2012-11-08), JP 2012 162230 A (YOKOHAMA), 30 August 2012 (2012-08-30), and JP 2012 14861 A (BRIDGESTONE), 9 August 2012 (2012-08-09), relate to run-flat tires.

In general, when a cord composed of an organic fiber, such as PET, is used as a reinforcing member of a tire, the cord is subjected to a dipping treatment by an adhesive agent, such as a resorcin-formalin-latex (RFL)-based adhesive agent, then rubberized, and applied to a tire as a rubber-cord composite body. However, since there are few reaction active sites on the surface of a polyester fiber, such as PET, due to a chemical structure thereof, it has been difficult to ensure the adhesive strength between a filament and the adhesive agent in a step of combining the cord and the rubber. As a technique for improving the adhesive property between PET and a rubber, Patent Document 1, for example, discloses a two-bath treatment in which PET is once dipped in an epoxy-based adhesive agent, and then again dipped in an RFL-based adhesive agent.

RELATED ART DOCUMENT

PATENT DOCUMENT

Patent Document 1: Japanese Unexamined Patent Application Publication No. 2000-355875 (claims, etc.)

SUMMARY OF THE INVENTION

PROBLEMS TO BE SOLVED BY THE INVENTION

However, there has been a problem in that, in the case in which a safety tire of side reinforced type is made to run with a low inner pressure, along with rolling of the tire, a compression strain cyclically occurs in a concentrated manner between a side reinforcing rubber and a bead filler rubber provided on a tire radial direction outer side of a bead core so that a carcass ply cord is fatigued, a cord strength thereof decreases, and travelling with a low inner pressure becomes difficult.

Moreover, the adhesive property between PET and a rubber can be improved by the two-bath treatment proposed in above Patent Document 1. However, when a tire is used under a high-load and high-temperature environment, a further high adhesive property under input of a dynamic strain, particularly a heat resistant adhesive property between a polyester fiber and a rubber is required, and establishing a new technology has been expected. Moreover, there has been a problem in that, when the epoxy-based adhesive agent in Patent Document 1 is used, a treated coat cures and compression input to a carcass ply which is generated due to rolling accordingly causes the cord strength in the tire to easily decrease. This applies not only to a case in which a polyester fiber is used for a carcass ply cord but also to a case in which an aramid fiber is used for the same.

Therefore, it is an object of the present invention to provide a pneumatic safety tire in which the durability is improved by improving a compression fatigue property of a carcass ply cord and by improving a heat resistant adhesive property between a carcass ply cord and a rubber.

MEANS FOR SOLVING THE PROBLEMS

Specifically, a pneumatic safety tire of the present invention includes: as a skeleton, a carcass having at least one carcass ply extending between a pair of bead cores embedded in a corresponding pair of bead portions; and a side reinforcing rubber on a tire width direction inner side of the carcass in a side wall portion; in which, in a cross section in a tire width direction, provided that the area of the side reinforcing rubber is S1, the area of the bead filler arranged on a tire radial direction outer side of the bead core is S2, and the area of a rubber chafer arranged on a tire width direction outer side of the bead filler and the bead core is S3, the following expressions (1) and (2) are satisfied:

$$0.10 \leq (S2 + S3)/S1 \leq 2.50 \quad (1)$$

$$0.3 \leq S2/(S2 + S3) \leq 0.9 \quad (2),$$

a reinforcing cord of the carcass ply is composed of a polyester fiber and/or an aramid fiber, and subjected to an adhesive agent treatment in which an adhesive agent containing at least one of a thermoplastic polymer (A), a heat reactive aqueous urethane resin (B), and an epoxide compound (C) is used as a first bath treatment liquid, and a resorcin-formalin-latex-based adhesive agent is used as a second bath treatment liquid, and a principal chain of the thermoplastic polymer (A) substantially fails to include a double bond between carbons having an addition reactivity, is composed of an ethylene addition polymer and/or a urethane-based high molecular weight polymer, each of which is composed mostly of a linear chain structure, and includes at least one cross-linkable functional group as a pendant group.

Note that, in this specification, a "pendant group" refers to a functional group for modifying a polymer chain. Moreover, introducing a pendant group into a polymer chain may be performed according to a method of polymerizing a monomer including a group caused to be pendant, as well as according to known methods, such as a method of introducing a pendant group into a polymer chain by a chemical modification reaction. Moreover, "aqueous" of an aqueous resin refers to being water-soluble or water-dispersible, and a "carbon-carbon double-bond having an addition reactivity" does not include a carbon-carbon double bond having a resonance stability, such as 6-membered aromatic ring.

EFFECTS OF THE INVENTION

According to the present invention, employing the above configuration has enabled a pneumatic safety tire having an improved durability to be realized.

BRIEF DESCRIPTION OF THE DRAWINGS

FIGS. 1(a) to 1(c) are a half sectional view in the width direction illustrating one example of a pneumatic safety tire of the present invention.
FIG. 2 is a partially cutaway perspective view illustrating further another example of the pneumatic safety tire of the present invention.
FIG. 3 is an explanatory diagram illustrating the generation state of a turbulent flow by protrusion portions for turbulent flow generation.
FIG. 4 is an explanatory diagram illustrating arrangement conditions of the protrusion portions for turbulent flow generation.
FIG. 5 is a sectional view illustrating a rubber test piece used in a dynamic adhesion test in examples.
FIG. 6 is a schematic explanatory diagram illustrating a dynamic adhesion test method in the examples.

MODE FOR CARRYING OUT THE INVENTION

Hereinafter, embodiments of the present invention will be described in detail with reference to the drawings.

FIGS. 1(a) is a half sectional view in the width direction illustrating one example of a pneumatic safety tire of the present invention. As illustrated, the pneumatic safety tire of the present invention includes, as a skeleton, a carcass 2 having at least one carcass ply extending between a pair of bead cores 1 embedded in a corresponding pair of bead portions 11. The tire as illustrated is a safety tire of so-called side reinforced type which includes two belt layers 3 on a tire radial direction outer side of a crown portion of the carcass 2, and a side reinforcing rubber 4 having a substantially

crescent cross sectional shape on a tire width direction inner side of the carcass 2 in a side wall portion 12.

As illustrated, in the tire of the present invention, in a cross section in a tire width direction, provided that the area of the side reinforcing rubber 4 is S1, the area of a bead filler 5 is S2, and the area of a rubber chafer 6 is S3, it is important to satisfy the following expressions (1) and (2):

$$0.10 \leq (S2 + S3)/S1 \leq 2.50 \quad (1)$$

$$0 \leq S2/(S2 + S3) \leq 0.9 \quad (2).$$

This is for the following reason.

That is, to support loads of a vehicle when the inner pressure of the tire is decreased, enhancing the rigidity of the side wall portion and a bead portion of the tire is required. To enhance the rigidity of the side wall portion, arranging, in the vicinity of a tire maximum width, the side reinforcing rubber 4 having a substantially crescent cross sectional shape on the tire width direction inner side of the carcass ply is effective. Further, to enhance the rigidity of the bead portion, inserting a rubber having a high elastic modulus in the vicinity of a part in which the carcass ply 2 and the bead core 1 are adjacent to each other, and in the vicinity of a part in which a rim and the tire come in contact with each other is effective. In this case, it is considered that the rigidity of the side wall portion can be controlled by the area S1 of the side reinforcing rubber 4, and the rigidity of the bead portion can be controlled by the sum of the area S2 of the bead filler 5 and the area S3 of the rubber chafer 6 (S2 + S3).

From such a point of view, the present inventors have further studied to find out that the relation between the area S1 of the side reinforcing rubber 4 and the sum of the areas of the bead filler 5 and the rubber chafer 6 (S2 + S3), as described above, is defined in accordance with the above expression (1) so that the rigidity of the side wall portion and the bead portion is enhanced in a well-balanced manner, and the tire capable of supporting loads even during decrease of the inner pressure can be obtained. If the value of (S2 + S3)/S1 is less than 0.10, the relative rigidity of the bead portion is decreased, and the tire may develop early trouble in the vicinity of the bead portion. Moreover, if the value of (S2 + S3)/S1 is greater than 2.50, deflection of the side wall portion increases, and the tire may develop early trouble due to rubber fractures by heat generation. Preferably, the tire of the present invention satisfies the following expression (3):

$$0.20 \leq (S2 + S3)/S1 \leq 1.50 \quad (3).$$

Thereby, the durability of the tire during run-flat running can be further improved.

Moreover, to avoid decrease in strength of a cord along with cyclical compression input to the carcass ply in the vicinity of the bead portion, it is required for the value of S2/(S2 + S3) which is a ratio of the area S2 of the bead filler 5 to the sum of the areas of the bead filler 5 and the rubber chafer 6 (S2 + S3) to satisfy the above expression (2). If the value of S2/(S2 + S3) is greater than 0.9, during deflection of the tire to which loads are applied, compression input to the carcass ply increases in accordance with deformation of the side wall portion, and decrease in strength of the cord is amplified. Meanwhile, the value of S2/(S2 + S3) may be zero, in other words, in the present invention, the bead filler 5 may not be provided. In this case, since compression input to the cord is extremely small, decrease in strength of the cord can be suppressed to be extremely small as well. Preferably, the tire of the present invention satisfies the following expression (4):

$$0 \leq S2/(S2 + S3) \leq 0.80 \quad (4).$$

Thereby, avoiding decrease in strength of the cord after the running is enabled.

In the tire of the present invention, it is suitable that, in the cross section in the tire width direction, the area S1 of the side reinforcing rubber 4, the area S2 of the bead filler 5, and the area S3 of the rubber chafer 6 satisfy the above expressions (1) and (2), and preferably further the above expressions (3) and (4), and a specific formulation, properties, and the like of rubber compositions constituting the respective side reinforcing rubber 4, bead filler 5, and rubber chafer 6 are not particularly limited.

Here, as illustrated, the side reinforcing rubber 4 is arranged between the carcass ply 2 and an inner liner (unillustrated) of the tire to extend from an end portion of the belt 3 beyond a tire maximum width portion to the bead portion 11. Meanwhile, in the present invention, the side reinforcing rubber 4 is not limited to a rubber composed of one

rubber composition, but may be composed of a laminated structure or a combined structure of substantially plural rubbers. Moreover, the side reinforcing rubber 4 is not limited to a rubber having a substantially crescent cross sectional shape as illustrated. Further, the bead filler 5 is usually arranged between a body portion 2A of the carcass ply which toroidally extends between the bead cores 1 and a folded-back portion 2B of the carcass ply which is folded back around the bead core 1 from the inside to the outside and on a tire radial direction outer side of the bead core 1. Still further, in the rubber chafer 6, a lower end portion is disposed on the tire radial direction inner side relative to a tire radial direction outer side end of the bead core 1, and an upper end portion is disposed in a region located to range from 10 to 70% of a section height of the tire. Here, the section height of the tire means a height in the tire radial direction under no load while the tire is mounted on the prescribed rim and inflated with a predetermined pneumatic pressure. Further, the standard is an industrial standard, as described below, which is valid in an area where the tires are manufactured or used.

Furthermore, in the present invention, a reinforcing cord of the carcass ply 2 is composed of a polyester fiber and/or an aramid fiber. As the reinforcing cord of the carcass ply 2, a polyester fiber cord, an aramid fiber cord, or a hybrid cord of a polyester fiber cord and aramid fiber cord is used so that, since these fibers have a high strength per weight and a high rigidity, the strength of the tire is retained by less cords and rubbers, while the roundness of the tire is ensured, and an effect excellent for retaining the shape of the tire can be obtained. Specific examples of the polyester fiber may include polyethylene terephthalate (PET), polyethylene naphthalate (PEN), and polytrimethylene terephthalate (PTT). Above all, in the present invention, as the reinforcing cord of the carcass ply 2, PET, PEN, and the aramid fiber may be preferably used. Particularly, PEN has a rigid molecular structure so that the shape retention property of the tire can be enhanced.

In particular, in the present invention, as the reinforcing cord of the carcass ply 2, a polyester cord in which particular polyester filaments are twisted together and then subjected to an adhesive agent treatment may be preferably used. Specifically, as the polyester filament used for the carcass ply, particular polyester filaments having a fiber surface to which a particular epoxy-based surface treatment agent is attached is preferably used.

A preferable polyester filament in the present invention as described is made of a fiber made of polyester in which the primary repeating unit is ethylene terephthalate and whose intrinsic viscosity is 0.85 or more, the amount of terminal carboxy group in the fiber is 20 equivalent/ton or more, the long period according to small-angle X-ray diffraction is 9 to 12 nm, and a surface treatment agent having an epoxy group is attached to the surface of the fiber.

The intrinsic viscosity of the above polyester fiber is required to be 0.85 or more, and is preferably 1.10 or less. More preferably, a polyester fiber having an intrinsic viscosity in the range of 0.90 to 1.00 is used. When the intrinsic viscosity is less than 0.85, the strength of the polyester fiber is insufficient, and particularly, decrease in strength in a tire vulcanizing step may not be sufficiently suppressed.

Moreover, in the above polyester fiber, it is required that the amount of terminal carboxy group of the total polymer is 20 equivalent/ton or more while a surface treatment agent having an epoxy group is attached to the fiber surface thereof. Conventionally, in a polyester fiber used for reinforcing a tire, for the purpose of improving the heat deterioration resistance thereof or the like, maintaining the carboxy group of the polymer at 15 equivalent/ton or less has been a general method. However, the present inventors have found out that, since a polyester fiber for reinforcing a tire highly requires maintaining the adhesive property to a rubber in addition to maintaining the strength of the fiber, in the case in which the long period according to small-angle X-ray diffraction is as small as 9 to 12 nm, and the surface has been subjected to an epoxy treatment, such as in the case of the polyester fiber of the present invention, the amount of carboxy group of 20 equivalent/ton or more is optimal for reinforcing a tire. The upper limit of the amount of carboxy group in the polymer is preferably 40 equivalent/ton or less, and more preferably, in a range of 21 to 25 equivalent/ton.

Here, as the surface treatment agent having an epoxy group which is to be attached to the surface of the above polyester fiber, those containing an epoxy compound which is a mixture of one, or two or more types of epoxy compounds having two or more epoxy groups in one molecule are preferable. More specifically, halogen-containing epoxies are preferable, and examples thereof may include those obtained by synthesis with epichlorohydrin polyhydric alcohol or polyvalent phenol, and a compound such as glycerolpolyglycidylether is preferable. The amount of the surface treatment agent containing such an epoxy compound which is attached to the fiber surface is in the range of 0.05 to 1.5% by mass, preferably 0.10 to 1.0% by mass. The surface treatment agent may be mixed with a smoothing agent, an emulsifier, an antistatic agent, other additives, or the like as necessary.

Further, in the above polyester fiber, the long period according to small-angle X-ray diffraction is required to be 9 to 12 nm. The long period according to small-angle X-ray diffraction described herein refers to the interval between crystals in the polyester polymer in the fiber vertical axis direction. This long period in the polyester fiber of the present invention is characterized by being short, the number of tie molecules connecting crystals is large, and as the result, the strength maintaining rate in the case in which the polyester fiber of the present invention is used as the fiber for reinforcing a tire can be maintained high. Moreover, the long period falls within the above-mentioned range so that physical properties of the fiber can be made to be appropriate as the fiber for reinforcing a tire having high modulus and low degree of shrinkage. Generally, for the range of the long period, 9 nm is the lower limit. Preferably, the long period according to small-angle X-ray diffraction of the above-mentioned polyester fiber is in the range of 10 to 11 nm.

In the present invention, the amount of terminal carboxy group on the fiber surface (original yarn surface) of the polyester fiber is preferably 10 equivalent/ton or less. The amount of carboxy group of whole polymer in the polyester fiber of the present invention is required to be, as described above, 20 equivalent/ton or more, while the amount of carboxy groups on the fiber surface is preferably 10 equivalent/ton or less, which is less than that of the whole polymer due to the reaction with an epoxy compound attached to the fiber surface. As described above, carboxy groups in the polymer is reacted with an epoxy group on the fiber surface so that a polyester resin of the present invention has an extremely excellent adhesion performance. At the same time, if too large amount of terminal carboxy groups on the fiber surface are left, the heat resistance and adhesive property tend to decrease.

Moreover, in the above polyester fiber, the crystal size in the fiber lateral axis direction is preferably in the range of 35 to 80 $nm^2$. Although the polyester fiber of the present invention has the long period which is the interval of crystals in the fiber vertical axis of as short as 12 nm or less, since largeness of the crystal is also required for obtaining a high strength fiber, in the present invention, the crystal size of the fiber in the lateral axis direction preferably grows to 35 $nm^2$ or more. However, if the crystal size is too large, the fiber becomes rigid and the fatigue property deteriorates, and thus the crystal size is preferably 80 $nm^2$ or less. Moreover, the crystal size in the fiber lateral axis direction is more preferably in the range of 40 to 70 $nm^2$. As described above, the crystal of the fiber develops in the lateral axis direction so that tie molecule is likely to develop in the fiber lateral axis direction as well, and accordingly a three-dimensional structure is made in the longitudinal and lateral direction of the fiber, thereby obtaining a fiber which is particularly suitable for reinforcing a tire. Further, since the fiber has such a three-dimensional structure, the loss coefficient of the fiber tan $\delta$ becomes low. As the result, the amount of heat under a cyclical stress can be suppressed, and keeping the adhesion performance after providing a cyclical stress is enabled, thereby obtaining the fiber which is particularly preferable for reinforcing a tire.

Further, in the above polyester fiber, the amount of terminal methyl groups in the fiber is preferably 2 equivalent/ton or less, more preferably, terminal methyl groups are not contained. This is because the methyl groups in polyester polymer has low reactivity and do not react with an epoxy group at all so as to be likely to inhibit a reaction between a carboxy group and an epoxy group which is effective for improving the adhesive property. If there are no terminal methyl groups or a small amount of terminal methyl groups in the polymer constituting the fiber, a high reactivity with an epoxy group in the surface treatment agent is ensured, and a high adhesive property and surface protection ability can be ensured.

Still further, in the above polyester fiber, the titanium oxide content in the fiber is preferably 0.05 to 3.0% by mass. If the titanium oxide content is less than 0.05% by mass, the smoothing effect for dispersing a stress applied between a roller and the fiber in a drawing step or the like tends to be insufficient, which may be disadvantageous for enhancing the strength of the finally obtained fiber. On the other hand, if the content of titanium oxide is more than 3.0% by mass, titanium oxide functions as a foreign matter inside the polymer to inhibit the drawing property, and the strength of finally obtained fiber also tends to decrease.

Still further, in the above polyester fiber, the epoxy index of the surface of the fiber is preferably $1.0 \times 10^{-3}$ equivalent/kg or less. Specifically, the epoxy index per 1 kg of polyester fiber is preferably $0.01 \times 10^{-3}$ to $0.5 \times 10^{-3}$ equivalent/kg. When the epoxy index of the fiber surface is high, there tend to be a large amount of unreacted epoxy compounds, and, for example, a large amount of viscous scum on guides or the like in a twisting step is generated, the process passability of the fiber decreases, and a problem which causes decrease in product quality, such as twist unevenness, occurs.

The strength of the above polyester fiber is preferably in the range of 4.0 to 10.0 cN/dtex. Both when the strength is too low and when the strength is too high, the durability in rubber consequently tends to deteriorate. For example, if the fiber is manufactured at the highest strength, breaking of a thread in a spinning step tends to occur, which is likely to be detrimental to the quality stability as industrial fiber. Moreover, the dry heat shrinkage percentage of the fiber at a temperature of 180°C is preferably in the range of 1 to 15%. When the dry heat shrinkage percentage is too high, change in size during processing tends to increase, and the dimensional stability of a formed product in which the fiber is used tends to be poor.

Further, in the present invention, such a reinforcing cord of the carcass ply 2 is subjected to an adhesive agent treatment in which an adhesive agent containing at least one of a thermoplastic polymer (A), a heat reactive aqueous urethane resin (B), and an epoxide compound (C) is used as a first bath treatment liquid, and a resorcin-formalin-latex-based adhesive agent is used as a second bath treatment liquid. The adhesive agent treatment is performed by using such particular first bath treatment liquid and second bath treatment liquid, thereby enabling dramatic improvement in dynamic adhesion property (heat resistant adhesive property) to be realized.

In the present invention, as the thermoplastic polymer (A), a principal chain substantially fails to include a double bond between carbons having an addition reactivity, is composed of an ethylene addition polymer, such as an acrylic polymer, a vinyl acetate polymer, a vinyl acetate ethylene polymer, and/or a urethane-based high molecular weight polymer, each of which is composed mostly of a linear chain structure, and includes at least one cross-linkable functional group as a pendant group. Moreover, when the principal chain of the thermoplastic polymer (A) is composed of the

ethylene addition polymer, it is preferable that the ethylene addition polymer is substantially composed of a monomer having one carbon-carbon double bond, and the carbon-carbon double bond having an addition reactivity which is introduced by a conjugated diene monomer or the like is 10% or less by the monomer composition ratio.

As the monomer constituting the ethylene addition polymer, examples of the ethylenic unsaturated monomer having one carbon-carbon double bond may include, for example, an $\alpha$-olefins such as ethylene, propylene, butylene, and isobutylene; $\alpha,\beta$-unsaturated aromatic monomers such as styrene, $\alpha$-methyl styrene, monochlorostyrene, vinyltoluene, vinylnaphthalene, styrene, and sodium sulfonate; ethylenic carboxylic acids such as an itaconic acid, a fumaric acid, a maleic acid, an acrylic acid, a methacrylic acid, and a butene tricarboxylic acid, and salts thereof; acid anhydrides such as maleic anhydride, and itaconic acid anhydride; esters of an unsaturated carboxylic acid such as (meth)acrylic acid methyl, (meth)acrylic acid ethyl, (meth)acrylic acid butyl, (meth)acrylic acid 2-ethyl hexyl, (meth)acrylic acid methoxy polyethylene glycol, (meth)acrylic acid 2-hydroxyethyl, and (meth)acrylic acid 2-amino ethyl; monoesters of an ethylenic dicarboxylic acid such as itaconic acid monoethyl ester, fumaric acid monobutyl ester, and maleic acid monobutyl ester; diesters of an ethylenic dicarboxylic acid such as itaconic acid diethylester, and fumaric acid dibutyl ester; amides of an $\alpha,\beta$-ethylenic unsaturated acid such as acrylamide, maleic acid amide, N-methylol acrylamide, N-(2-hydroxyethyl)acrylamide, methacrylamide, N-methylol methacrylamide, N-(2-hydroxyethyl)methacrylamide, and maleic acid amide; hydroxyl group-containing monomers such as 2-hydroxyethyl(meth)acrylate, polyethylene glycol mono(meth)acrylate; unsaturated nitriles such as acrylonitrile, methacrylonitrile, fumaronitrile, and $\alpha$-chloroacrylonitrile; vinylethers such as methyl vinylether, and ethyl vinylether; vinylketone; vinyl amide; halogen-containing $\alpha,\beta$-unsaturated monomers such as vinyl chloride, vinylidene chloride, vinyl fluoride, and vinylidene fluoride; a vinyl compound such as vinyl acetate, valeric acid vinyl, vinyl caprylate, and vinylpyridine; addition polymerizable oxazolines such as 2-isopropenyl-2-oxazoline; heterocyclic vinyl compounds such as vinylpyrrolidone; and unsaturated bond-containing silane compounds such as vinylethoxy silane, and $\alpha$-methacryloxypropyl trimethoxy silane, and any of these may be used singly or two or more of these may be used in combination. The thermoplastic polymer (A) is preferably obtained by radical addition polymerization of these monomers.

As the monomer constituting a principal chain skeleton, examples of the monomer which contains two or more carbon-carbon double bonds may include conjugated diene monomers such as 1,3-butadiene, 2-methyl-1,3-butadiene, 2,3-dimethyl-1,3-butadiene, and halogen-substituted butadienes such as chloroprene, examples of unconjugated diene monomer may include unconjugated diene monomers such as vinyl norbornene, dicyclopentadiene, and 1,4-hexadiene, and any of these may be used singly or two or more of these may be used in combination.

The urethane-based high molecular weight polymer is a high molecular weight polymer having a large amount of bonds caused by a reaction between an isocyanate group and an active hydrogen, mainly such as urethane bonds or urea bonds obtained by polyaddition reaction of polyisocyanate and a compound having two or more active hydrogen atoms. Note that not only the bonds caused by the reaction between an isocyanate group and an active hydrogen but also an ester bond, an ether bond, and an amide bond contained in the molecule of the active hydrogen compound, and urethodione, carbodiimide generated by the reaction between isocyanate groups, or the like may be contained.

The cross-linkable functional group as the above pendant group is at least one of an oxazoline group, a bismaleimide group, a (blocked) isocyanate group, an aziridine group, a carbodiimide group, a hydrazino group, an epoxy group, and an epithio group, and is more preferably an oxazoline group.

As the heat reactive aqueous urethane resin (B), a resin having in one molecule two or more thermally dissociating blocked isocyanate groups is preferably used. For example, a heat reactive aqueous polyurethane compound represented by the formula below is optimal:

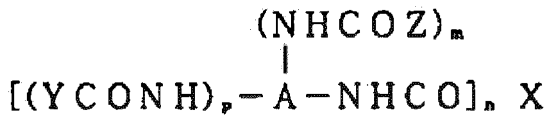

(wherein A represents an isocyanate residue of an organic polyisocyanate compound having the number of functional groups of 3 to 5; Y represents an active hydrogen residue of a blocking agent compound which detaches an isocyanate group by heat treatment; Z represents an active hydrogen residue of a compound having in the molecule at least one active hydrogen atom and at least one group which can generate anion; X represents an active hydrogen residue of a polyol compound having two to four hydroxyl groups and having an average molecular weight of 5,000 or smaller; n is an integer of 2 to 4; and p+m represents an integer of 2 to 4 ($m \geq 0.25$)).

As the epoxide compound (C), any compound having in one molecule two or more, preferably four or more epoxy groups will achieve the object of the present invention, but, preferably, compounds having epoxy group, or a reaction product of polyhydric alcohols and epichlorohydrin. Specific example of epoxide compound may include reaction product of polyhydric alcohols and epichlorohydrin such as diethylene glycol diglycidylether, polyethylene diglycidylether, polypropylene glycol diglycidylether, neopentylglycol diglycidylether, 1,6-hexanediol diglycidylether, glycerol polyglycidylether, trimethylolpropane polyglycidylether, polyglycerol polyglycidylether, pentaerythiol polyglycidylether, diglycerol polyglycidylether, and sorbitol polyglycidylether; a novolac type epoxy resin, such as a phenol novolac type epoxy resin, and cresol novolac type epoxy resin; and a bisphenol A type epoxy resin. As the epoxide compound, sorbitol polyglycidylether and polyglycerolpolyglycidylether are preferably used.

In the present invention, a liquid mixture of the above components (A), (B), and (C) is used as the first bath treatment liquid. Regarding the percentage of each component, in terms of dry weight percentage in the adhesive agent composition, it is preferable that the component (A) constitutes 2 to 75%, the component (B) constitutes 15 to 87%, and the component (C) constitutes 11 to 70%.

In the present invention, the carcass 2 is composed of at least one, for example, one to three, particularly, one to two carcass plies in which the plural reinforcing cords arranged in parallel with each other are coated with a coating rubber. In the present invention, if the two or more carcass plies 2 are provided, every reinforcing cord of the carcass plies 2 is composed of a polyester fiber or an aramid fiber, and is subjected to the above particular adhesive agent treatment.

Further, in the present invention, an adhesive strength of the reinforcing cord of the carcass ply 2 is preferably 12 N or more per cord, particularly 15 N or more per cord. The adhesive strength of the reinforcing cord of the carcass ply 2 falls within this range, thereby ensuring a sufficient durability against deflection and heat generation due to deflection deformation during run-flat running, which is preferable. Here, the above adhesive strength refers to a value measured by the below dynamic adhesion test.

Still further, in the present invention, an intermediate elongation of the reinforcing cord, which is taken out from a product tire, of the carcass ply in the crown portion under 66 N falls within preferably 3.5 to 6.5%, particularly 4.5 to 6.0% when the reinforcing cord of the carcass ply is composed of a polyester fiber, and 0.5 to 2.5% when the reinforcing cord of the carcass ply is composed of an aramid fiber. Such intermediate elongation of the reinforcing cord of the carcass ply falls within this range, thereby suppressing deflection deformation and heat generation due to deflection deformation during run-flat running and accordingly enabling improvement in travel distance, and an effect excellent for retaining the shape of the tire inflated with the inner pressure can be obtained.

Further, in the present invention, the carcass ply 2 is, as illustrated, folded back and wound up around the bead core 1 from the inside to the outside. This folded-back portion 2B of the carcass ply is, as illustrated, preferably located further on the side of the bead core 1 than a maximum thickness portion of the side reinforcing rubber 4. This is because the ply cord becomes hard to suffer compressive deformation, which can suppress fatigue of the ply cord and leads to decrease in weight of the tire.

More preferably, a height $H_E$ of the folded-back portion 2B of the carcass ply from the center of the bead core 1 is 30 mm or less, particularly in the range of 5 to 25 mm, and, for example, as illustrated in FIG. 1(b), a height of a folded-back end of the carcass ply 2 is set to be low. If the folded-back portion 2B of the carcass ply is set to be located lower on the side of the bead core 1 than the maximum thickness portion of the side reinforcing rubber 4, and, particularly, the height $H_E$ thereof is 30 mm or less, a structure in which an organic fiber is not provided in the vicinity of a contact point between a rim flange and the tire to which compression input is applied during application of loads is made, which enables control of tire performance, such as steering stability, regardless of the fatigue property of the cord. If the height of the folded-back portion 2B of the carcass ply is too high, compression input applies to a rim flange portion so that an adjacent end of the reinforcing cord becomes fatigued, which acts as a rupture nucleus causing peeling of a rubber layer, and the like, and may prevent the durability of the tire during normal running from being sufficiently improved.

Moreover, in the present invention, also preferably, a height $H_F$ of the bead filler 5 is 15 mm or less, particularly in the range of 10 mm or less. For example, as illustrated in FIG. 1(c), the bead filler 5 has a small shape so that the folded-back portion 2B of the carcass cord is just along the inner surface of the tire, and accordingly, when a flexural input using as a fulcrum point the contact point between the rim flange and the tire is applied to the vicinity of the bead portion during application of loads, the carcass cord exists outside the flexural deformation, and not compression input but only tension input is applied to the cord. Thereby, promotion of decrease in strength of the carcass cord of the folded-back portion due to cyclical flexural deformation can be suppressed, and the occurrence of failure due to breaking of the cord can be suppressed, which enables control of tire performance, such as steering stability, regardless of the fatigue property of the cord, and consequently, even a carcass cord having a high rigidity ensures product durability and an advantage of improvement in steering stability can be enjoyed.

In the present invention, the height of the bead filler 5 is set to 15 mm or less because, since the shape and the value of the rim flange are standardized, setting the height of the bead filler 5 to 15 mm or less regardless of the size enables the carcass cord to avoid a portion to which compression input is applied. If the height of the bead filler 5 is 15 mm or less, compression input may be applied to the verge of a ply end due to the flexural rigidity around the bead, inner pressure conditions, input or the like, and thus, by setting the height of the bead filler 5 preferably to 10 mm or less, compression input can be assuredly avoided regardless of types of the tire. The lower limit of the height of the bead filler 5 is not particularly limited, and for example, may also be 0 mm (no bead filler rubber).

Here, in the present invention, the height of the carcass ply 2 and the bead filler 5 means the height in the tire

radial direction under no load when the tire is mounted on the prescribed rim and is inflated with a predetermined pneumatic pressure. Meanwhile, the prescribed rim refers to a rim defined in the following standards, and the predetermined pneumatic pressure refers to a pneumatic pressure defined corresponding to the maximum load capacity in the below standards. The standard is an industrial standard which is valid in an area where the tire is manufactured or used, and, for example, in the United States of America, the standard is "Year Book" by The Tire and Rim Association Inc.; in Europe, the standard is "Standards Manual" by The European Tire and Rim Technical Organization; and in Japan, the standard is JATMA Year book by Japan Automobile Tyre Manufacturers Association.

The belt layers 3 are composed of a rubberized layer in which cords extend obliquely by 15° to 35° with respect to a tire equatorial plane, preferably a rubberized steel cord layer, and the belt layers 3 of two layers are usually laminated such that the cords constituting the belt layers 3 cross with each other with respect to the equatorial plane so as to constitute a belt. In the example as illustrated, the belt is composed of two belt layers 3, whereas, in the tire of the present invention, the number of the belt layers constituting the belt is not limited to this. Further, although unillustrated, a belt reinforcing layer (cap layer) covering the entirety of the belt and a pair of belt reinforcing layers (layered layer) covering only both ends of the cap layer which are composed of rubberized layers in which cords are arrayed substantially in parallel with respect to the tire circumferential direction may be disposed on the tire radial direction outer side of the belt layer 3.

Moreover, in the tire of the present invention, as illustrated in FIG. 2, protrusion portions for turbulent flow generation 7 may also be provided on at least a part of a tire surface other than a ground contact portion and a portion contacting with the rim while the tire is mounted thereon, preferably on a tire side portion as illustrated. Providing such protrusion portions for turbulent flow generation 7 improves an effect of dissipating heat from the tire surface, suppresses an increase in temperature of the tire during run-flat running, and enables maintenance of the temperature around the carcass 2 around a temperature at which fiber cords constituting the carcass 2 show a high thermal shrinkage stress. As the result, a deflection suppressing effect during run-flat running can be obtained, and further improving temporary lifetime of the run-flat tire is enabled.

The protrusion portions for turbulent flow generation 7 are provided on the tire surface so that the air normally flowing on the surface in the tire circumferential direction in accordance with rotation of the tire turns into a turbulent flow at a portion where the air contacts the protrusion portions for turbulent flow generation 7 and flows on the tire surface, thereby performing a positive heat exchange with the tire surface, and promoting heat dissipation from the tire. Here, with reference to FIG. 3, the generation state of the turbulent flow caused by the protrusion portions for turbulent flow generation 7 in the present invention will be described. FIG. 3 is a partial sectional view illustrating the vicinity of the surface of the run-flat tire of the present invention. As illustrated, during running, an airflow S1 in contact with the portion of the tire surface at which the protrusion portions for turbulent flow generation 7 are not formed is peeled off from the tire surface at the protrusion portion for turbulent flow generation 7 in accordance with rotation of the tire, and climbs over the protrusion portion for turbulent flow generation 7. At this time, a portion (region) S2 at which the airflow remains is generated on a rear surface side of the protrusion portion for turbulent flow generation 7. Then, the airflow S1 bounces off the tire surface between this protrusion portion for turbulent flow generation 7 and the following protrusion portion for turbulent flow generation 7, and is again peeled off from the tire surface by the following protrusion portion for turbulent flow generation 7. At this time also, a portion (region) S3 at which the airflow remains is generated on a rear surface side of the following protrusion portion for turbulent flow generation 7.

At this time, to improve the heat dissipation effect of the tire, the rate of the airflow S1 in a region with which the airflow S1 that has turned into a turbulent flow as described above comes into contact is advantageously increased. From such a point of view, in the present invention, as illustrated, the plurality of protrusion portions for turbulent flow generation 7 are arranged in the tire circumferential direction, and provided that a distance between the protrusion portions for turbulent flow generation 7 which are adjacent to each other at respective points thereof equally dividing a width thereof w at the longitudinal-direction center thereof is a pitch p, and a height of the protrusion portions for turbulent flow generation 7 is h, the protrusion portions for turbulent flow generation 7 are preferably arranged such that relations of $1.0 \le p/h \le 50.\ 0$ and $1.0 \le (p-w)/w \le 100.0$ are satisfied (see FIGS. 3, 4).

If a value of p/h is less than 1.0, the airflow does not flow onto the tire surface sandwiched between the protrusion portions for turbulent flow generation 7 which are adjacent to each other, on the other hand, if the value of p/h is more than 50.0, a region on which an influence of the turbulent flow fails to exert is generated, and, in either case, a heat dissipation efficiency at a portion provided with the protrusion portion for turbulent flow generation 7 is similar to that at a portion not provided with the same. The value of p/h is more preferably $2.0 \le p/h \le 24.0$, and still more preferably $10.0 \le p/h \le 20.0$.

Moreover, in the present invention, (p-w)/w indicates a ratio of the width w of the protrusion portions for turbulent flow generation 7 to the pitch p, and if this value is small, this means that the ratio of the area of the protrusion portions for turbulent flow generation 7 to a heat dissipation surface increases, in other words, the area of the heat dissipation surface decreases. Thus, if this value of (p-w)/w is less than 1, the area of the heat dissipation surface is too small and an effect of sufficient improvement in heat dissipation efficiency cannot be expected, and further, an increase in heat

generation in the rubber due to an increase in volume of the rubber is feared. On the other hand, if the value of (p-w)/w is more than 100.0, the width w relative to the pitch p is too small so that a sufficient rigidity against the airflow S1 flowing toward and coming into contact with the protrusion portions for turbulent flow generation 7 cannot be maintained, and the role as the protrusion portions for turbulent flow generation 7 may be insufficient. The value of (p-w)/w is preferably $4.0 \leq (p-w)/w \leq 39.0$.

Further, in the tire of the present invention, the height h of the protrusion portions for turbulent flow generation 7 and the width w preferably satisfy 0.5 mm ≤ h ≤ 7 mm and 0.3 mm ≤ w ≤ 4 mm, respectively. If the height h is more than 7 mm and the width w is more than 4 mm, the volume of the protrusion portions for turbulent flow generation 7 increases so that heat generation in the protrusion portions for turbulent flow generation 7 increases, and the area of the surface covered by the protrusion portions for turbulent flow generation 7 increases so that heat may be accumulated on the rubber surface. Moreover, if the h is less than 0.5 mm and the w is less than 0.3 mm, in the manner as described above, the rigidity required for the protrusion portions for turbulent flow generation 7 cannot be maintained so that the heat dissipation effect may not be sufficiently obtained.

Moreover, as schematically illustrated in FIG. 4, in the tire of the present invention, the protrusion portions for turbulent flow generation 7 are preferably arranged such that an angle θ formed between a longitudinal direction thereof a and the tire radial direction r is 70° or less. The airflow over the tire surface on which the protrusion portions for turbulent flow generation 7 are arranged is directed slightly toward the tire radial direction outer side due to the centrifugal force caused by rotation of the tire. Then, if the angle θ formed by the longitudinal direction a of the protrusion portions for turbulent flow generation 7 with respect to the tire radial direction r is 70° or less, an inflow of the air to the tire surface decreases the portions S2, S3 at which the air remains generated behind the protrusion portions for turbulent flow generation 7, thereby enabling improvement in heat dissipation efficiency. Note that the longitudinal direction a of the protrusion portions for turbulent flow generation 7 may form with the tire radial direction r the angle within the sum of 140° composed of 70° on one side and 70° on the other side.

In this case, on the surface of the rotating tire, depending on positions thereon in the tire radial direction r, the airflow rate is different. Thus, if the plurality of protrusion portions for turbulent flow generation 7 are provided in the tire radial direction, the above angle θ preferably varies depending on positions of the corresponding protrusion portion for turbulent flow generation 7 in the tire radial direction.

In the present invention, the shape of the protrusion portions for turbulent flow generation 7 is not particularly limited, but preferably, as illustrated, the protrusion portions for turbulent flow generation 7 have apex portions 7A at least inward in the tire radial direction. That is, the protrusion portions for turbulent flow generation 7 have a shape including four apex portions 7A, as illustrated in FIG. 2, and also may have a shape in which the portions corresponding to the apex portions 7A are each curved surface, and include apex portions 7A at least inward in the tire radial direction so that a three-dimensional airflow is generated around these apex portions 7A, thereby further improving the heat dissipation effect.

Moreover, in the present invention, the protrusion portions for turbulent flow generation 7 are also preferably divided in the longitudinal direction. If the protrusion portions for turbulent flow generation 7 are divided in the longitudinal direction, the portions S2, S3 at which the air remains generated behind the protrusion portions for turbulent flow generation 7 during rotation of the tire are reduced so that balanced heat dissipation over the entirety of the portions provided with the protrusion portions for turbulent flow generation 7 can be achieved. Note that the number of division of the protrusion portions for turbulent flow generation 7 in this case is not particularly limited and may be optionally selected.

Further, in the tire of the present invention, when the plurality of protrusion portions for turbulent flow generation 7 are provided in each of the tire circumferential direction and tire radial direction, frequency of arrangement of the protrusion portions for turbulent flow generation 7 in the tire circumferential direction preferably varies depending on positions in the tire radial direction. On the surface of the rotating tire, depending on positions in the radial direction thereof, the airflow rate is different. Meanwhile, the heat dissipation efficiency depends on the rate of the air flowing over the tire surface. Thus, the plurality of protrusion portions for turbulent flow generation 7 are provided in each of the tire circumferential direction and tire radial direction, and frequency of arrangement, that is, the number of arrangement, of the protrusion portions for turbulent flow generation 7 in the tire circumferential direction is made to vary depending on the tire radial direction so that unevenness of the heat dissipation efficiency due to difference in positions on the tire surface in the tire radial direction can be overcome.

Moreover, for example, in the tire of the present invention, a tread pattern is formed, as appropriate, on the surface of the tread portion 13, and an inner liner (unillustrated) is formed on the innermost layer. Further, in the tire of the present invention, as a gas to be filled in the tire, a normal air or an air in which oxygen partial pressure is changed, or an inert gas, such as nitrogen, may be used.

EXAMPLES

The present invention will be described below further in detail by using examples.

Two yarn bound bodies having 1670 dtex which are a commonly used multifilament of polyethylene terephthalate (PET) were twisted with a twist number of 40 per 10 cm of length for first and final twists so that a PET cord having a structure represented by 1670 dtex/2 and the twist number of 40 × 40 (twists/10 cm) was obtained. In a similar manner, a cord of polyethylene naphthalate (PEN, raw yarn type No. Q904 (manufactured by Teijin Limited)) having a structure represented by 1670 dtex/2 and the twist number of 39 × 39 (twists/10 cm) and a cord of polyparaphenylene terephthalamide (aramid, Kevlar) (manufactured by Du Pont-TORAY Co., LTD.) having a structure represented by 1670 dtex/2 and the twist number of 39 × 39 (twists/10 cm) were each prepared.

In the below tables, an adhesive agent A includes formulations of two-bath dip liquid conventionally used for PET. A dip liquid A-1 for first bath is an epoxy-based adhesive agent composed of 1.20 parts by mass of diglyceroltriglycidylether, 0.02 parts by mass of sodium dioctylsulfosuccinate, 0.14 parts by mass of caustic soda (aqueous solution 10%), and 98.64 parts by mass of soft water. Moreover, a dip liquid A-2 for second bath is an RFL-based adhesive agent composed of 518.59 parts by mass of soft water, 15.12 parts by mass of resorcin, 16.72 parts by mass of formaldehyde (aqueous solution 37%), 11.00 parts by mass of caustic soda (aqueous solution 10%), 216.58 parts by mass of vinylpyridine-styrene-butadiene latex (concentration 41%), and 221.99 parts by mass of styrene-butadiene latex (concentration 40%). Moreover, from formulations of an adhesive agent B, a dip liquid for first bath is B-1 composed of 16.5% by mass (solid content weight) of Epocros K1010E (manufactured by Nippon Shokubai Co., Ltd.), 6% by mass (solid content weight) of ELASTRON BN27 (manufactured by DKS Co., Ltd.), 7.5% by mass (solid content weight) of Denacol-EX614B (manufactured by Nagase ChemteX Corporation), and 70% by mass of water. Moreover, a dip liquid for second bath is B-2 composed of 524.01 parts by mass of water, 15.12 parts by mass of resorcin, 16.72 parts by mass of formalin (37%), 4.00 parts by mass of caustic soda (10%), 233.15 parts by mass of vinylpyridine-styrene-butadiene copolymer latex (JSR0655, manufactured by JSR Corp., solid concentration 41%), and 207.00 parts by mass of styrene-butadiene copolymer latex (JSR2108, manufactured by JSR Corp., solid concentration 40%).

In accordance with the description in the below tables, the twisted cord as obtained above was dipped in a dip liquid for first bath and subjected to heat treatment in a dry zone at 160°C under tension of 2.0 kg per cord for 60 seconds and in a hot zone at 240°C under tension of 2.0 kg per cord for 60 seconds. Then, the cord was dipped again under a dip tension of 200 g in a dip liquid for second bath, and again subjected to heat treatment in a dry zone at 240°C for 60 seconds under tension of 2.0 kg per cord and in a hot zone under tension of 0.5 to 1.5 kg per cord for 60 seconds, that is, heat treatment for 240 seconds in total was performed so that a cord to which the adhesive agent had been applied was prepared. Moreover, as to a PET cord, the tension in the hot zone which is the last step of a dipping treatment process was slightly adjusted such that an intermediate elongation of the cord under load of 66 N was 3.8%.

(Dynamic adhesion test)

FIG. 5 is a perspective view illustrating a rubber test piece used in a dynamic adhesion test.

As illustrated, polyester cords 22 for reinforcing the tire in each example and comparative example were embedded in a rubber matrix such that cord layers are parallel with each other, and each rubber test piece 21 having a width W of 50 mm, a length L of 500 mm, and a height H of 5.5 mm was prepared. A placement density of the cords was 50 pieces/50 mm, a distance between cords $h_1$ was 2.5 mm, and a distance $h_2$ from the center of the cord to the surface was 1.5 mm. As illustrated in FIG. 6, each obtained rubber test piece 21 was hung on a pulley 23 (φ 50 mm), a load of 50 kg/inch was applied in the axial direction of the cord, a tension and a compressive force were cyclically applied at 100 rpm for 300,000 times. The above test was performed in a constant temperature bath capable of constantly retaining an atmospheric temperature, and dynamic adhesion properties at a high temperature of 100°C were tested. After the test, a sample was cooled, and then a pull-up adhesive property (N/cord) of the cord on the pulling side was measured to obtain the dynamic adhesion property. Here, the rubber matrix used for preparing the sample is composed of 60.0 parts by mass of natural rubber, 40.0 parts by mass of styrene-butadiene rubber (SBR), 45.0 parts by mass of carbon black (HAF), 2.0 parts by mass of softening agent (spindle oil), 3.0 parts by mass of zinc oxide, 1.0 parts by mass of antioxidant (Nocrac 6C, manufactured by Ouchi Shinko Chemical Industry Co., Ltd.), 0.8 parts by mass of vulcanization accelerator (Nocceler NS, manufactured by Ouchi Shinko Chemical Industry Co., Ltd.), 1.0 parts by mass of stearic acid, and 3.0 parts by mass of sulfur. The tension rate during the adhesion test was set to 300 mm/min. The rubber test piece was prepared under vulcanization condition of 160°C × 20 minutes.

The cord as obtained above was coated with a rubber so that a rubber-cord composite body of each example and comparative example was obtained. The obtained rubber-cord composite body was used, a treat having a placement density of the cords of 50 pieces/50 mm was prepared, and this was applied to a carcass ply so that a pneumatic safety tire of a tire having a tire size of 225/45R17 was manufactured.

This sample tire consecutively included: as a skeleton, a carcass having one carcass ply extending between a pair of bead cores embedded in a corresponding pair of bead portions; on a tire radial direction outer side of the carcass, a belt of two layers (material: steel) crossing with each other at an angle of ±40° with respect to the tire circumferential direction; and one layered layer (material: nylon) for covering the entire width of the belt layers Moreover,

a side reinforcing rubber was included on a tire width direction inner side of the carcass in a side wall portion, a bead filler was arranged on a tire radial direction outer side of the bead core, and a rubber chafer was arranged in a tire width direction outer side of the bead filler and the bead core. The area S1 of the side reinforcing rubber, the area S2 of the bead filler, and the area S3 of the rubber chafer in a cross section in a tire width direction were adjusted in such a manner as to satisfy the conditions indicated in the below tables so that the sample tire of each example and comparative example was manufactured. Note that, in comparative examples 7, 8 and examples 18-25, the bead filler was not provided.

(Run-flat (RF) drum test)

Each sample tire was assembled with the standard rim defined in JATMA, and then mounted to a drum testing machine, a valve core was pulled out to remove the inner pressure, a run-flat durability test was performed under load of 65% of the maximum load defined in JATMA, and a travel distance till occurrence of failure was measured. The results were indicated in terms of index setting comparative example 1 as 100. As this numerical value is greater, it is indicated that the travel distance is longer and run-flat durability is excellent.

(Drum durability test)

Each sample tire was assembled with the standard rim defined in JATMA, and then mounted to the drum testing machine, inflated with the inner pressure of 100 kPa, applied with the maximum load defined in JATMA, and made to run on the drum for 20000 km. After the test, each sample tire was dissected, a remaining strength of the carcass ply was measured, and a strength retention percentage was evaluated on the basis of the state in which each sample tire was new. The results were indicated in terms of index setting the strength retention percentage of comparative example 1 as 100. As the numerical value is greater, it is indicated that the drum durability is excellent. These results are also indicated in the below tables.

Table 1

| | Comparative example 1 | Comparative example 2 | Comparative example 3 | Comparative example 4 | Comparative example 5 | Example 1 | Comparative Example | Example 3 | Comparative Example | Comparative Example 6 | Example 5 |
|---|---|---|---|---|---|---|---|---|---|---|---|
| Expression (1) value | 3.2 | 0.05 | 1.5 | 3.3 | 0.02 | 2.5 | 2.5 | 0.1 | 0.1 | 2.0 | 1.4 |
| Expression (2) value | 0.95 | 0.99 | 0.98 | 0.15 | 0.5 | 0.9 | 0.05 | 0.9 | 0.1 | 0.4 | 0.9 |
| Carcass cord material | PET | PET | PET | PET | PET | PET | PET | PET | PET | PET | PET |
| Adhesive agent*1 | A | A | A | A | A | B | B | B | B | A | B |
| Ply end structure*2 | A | A | A | A | A | A | A | A | A | A | A |
| Adhesive property(N/cord) | 9 | 9 | 9 | 9 | 9 | 15 | 15 | 15 | 15 | 9 | 15 |
| Run-flat durability (Index) | 100 | 85 | 95 | 90 | 72 | 102 | 103 | 102 | 105 | 95 | 110 |
| Drum durability (Index) | 100 | 98 | 100 | 105 | 100 | 102 | 103 | 102 | 104 | 105 | 106 |

*1) Adhesive agent A is a two-bath dip liquid including: dip liquid A-1 for first bath (1.20 parts by mass of diglyceroltriglycidylether, 0.02 parts by mass of sodium dioctylsulfosuccinate, 0.14 parts by mass of caustic soda (aqueous solution 10%), and 98.64 parts by mass of soft water) and dip liquid A-2 for second bath (518.59 parts by mass of soft water, 15.12 parts by mass of resorcin, 16.72 parts by mass of formaldehyde (aqueous solution 37%), 11.00 parts by mass of caustic soda (aqueous solution 10%), 216.58 parts by mass of vinylpyridine-styrene-butadiene latex (concentration 41%), and 221.99 parts by mass of styrene-butadiene latex (concentration 40%)). Adhesive agent B is a two-bath dip liquid including: dip liquid B-1 for first bath (16.5% by mass (solid content weight) of Epocros K1010E (manufactured by Nippon Shokubai Co., Ltd.), 6% by mass (solid content weight) of ELASTRON BN27 (manufactured by DKS Co., Ltd.), 7.5% by mass (solid content weight) of Denacol-EX614B (manufactured by Nagase ChemteX Corporation), and 70% by mass of water) and dip liquid B-2 for second bath (524.01 parts by mass of water, 15.12 parts by mass of resorcin, 16.72 parts by mass of formalin (37%), 4.00 parts by mass of caustic soda (10%),

233.15 parts by mass of vinylpyridine-styrene-butadiene copolymer latex (JSR0655, manufactured by JSR Corp., solid concentration 41%), and 207.00 parts by mass of styrene-butadiene copolymer latex (JSR2108, manufactured by JSR Corp., solid concentration 40%)).

*2) A: structure in which the height $H_E$ of the folded back portion of the carcass ply from the center of a bead core is 60 mm. B: structure in which the height $H_E$ of the folded back portion of the carcass ply from the center of the bead core is 30 mm. C: structure in which the height $H_E$ of the folded back portion of the carcass ply from the center of the bead core is 15 mm.

Table 2

| | Comparative Example | Example 7 | Example 8 | Example 9 | Comparative Example | Example 11 | Comparative Example | Example 13 | Example 14 | Example 15 | Example 16 |
|---|---|---|---|---|---|---|---|---|---|---|---|
| Expression (1) value | 0.2 | 0.2 | 1.5 | 1.4 | 1.5 | 2.5 | 0.8 | 2.4 | 1.3 | 0.2 | 1.1 |
| Expression (2) value | 0.2 | 0.8 | 0.8 | 0.5 | 0.2 | 0.9 | 0.1 | 0.9 | 0.5 | 0.7 | 0.8 |
| Carcass cord material | PET | PET | PET | PET | PET | PET | PET | PET | PET | PET | PEN |
| Adhesive agent *1 | B | B | B | B | B | B | B | B | B | B | B |
| Ply end structure *2 | A | A | A | A | A | B | B | B | B | B | B |
| Adhesive property (N/cord) | 15 | 15 | 15 | 15 | 15 | 15 | 15 | 15 | 15 | 15 | 16 |
| Run-flat durability (Index) | 115 | 112 | 120 | 113 | 114 | 103 | 105 | 103 | 110 | 104 | 116 |
| Drum durability (Index) | 110 | 111 | 110 | 112 | 111 | 115 | 116 | 120 | 124 | 121 | 122 |

Table 3

| | Example 17 | Comparative example 7 | Comparative example 8 | Comparative Example | Camparative Example | Comparative Example | Comparative Example | Comparative Example | Comparative Example | Comparative Example | Comparative Example |
|---|---|---|---|---|---|---|---|---|---|---|---|
| Expression (1) value | 1.5 | 2.9 | 0.05 | 2.4 | 0.1 | 1.5 | 0.2 | 0.8 | 2.0 | 1.5 | 0.2 |
| Expression (2) value | 0.3 | 0 | 0 | 0 | 0 | 0 | 0 | 0 | 0 | 0 | 0 |
| Carcass cord material | Aramid | PET | PET | PET | PET | PET | PET | PET | PET | PET | PET |
| Adhesive agent *1 | B | A | A | B | B | B | B | B | B | B | B |
| Ply end structure *2 | B | A | A | A | A | A | A | A | A | C | B |
| Adhesive property (N/cord) | 16 | 9 | 9 | 15 | 15 | 15 | 15 | 15 | 15 | 15 | 15 |
| Run-flat durability (Index) | 118 | 80 | 62 | 101 | 102 | 105 | 105 | 103 | 102 | 110 | 105 |
| Drum durability (Index) | 124 | 100 | 98 | 103 | 102 | 105 | 106 | 107 | 110 | 136 | 117 |

As indicated in the above tables, the sample tire of each example, in which the reinforcing cord of the carcass ply is made of a polyester fiber or a aramid fiber and subjected to a predetermined adhesion treatment, and, in the cross section in the tire width direction, the ratios of the areas of the side reinforcing rubber, bead filler, and rubber chafer are set to satisfy the predetermined relations defined by the expressions (1) and (2), has been confirmed to have improved, as a whole, in adhesion property, run-flat durability, and drum durability in comparison with the sample tires of comparative examples which fail to satisfy the above relations.

(Manufacturing of polyester fiber)

By using a polyethylene terephthalate chip having a high carboxy group terminal having an intrinsic viscosity of 1.03, high-speed spinning by a melt spinning method and multi-stage stretching were performed, and an epoxy treatment was performed on the surface thereof to prepare the below polyester fiber. Note that 0.2 parts by mass of the oil agent used for the epoxy treatment was attached to 100 parts by mass of the fiber, and the amount of polyglycerolpolyglycidylether which was an epoxy compound component attached to the surface of the fiber was 0.12% by mass.

This polyester fiber had physical properties of an intrinsic viscosity of 0.91, a fineness of 1130 dtex, 384 filament, a strength of 6.9 cN/dtex, a degree of elongation of 12%, and a dry heat shrinkage percentage of 10.5%, an amount of terminal carboxy group of 22 equivalent/ton, a long period according to small-angle X-ray diffraction of 10 nm, an amount of terminal carboxy group on the fiber surface of 7 equivalent/ton, a crystal size in the fiber lateral axis direction of 45 $nm^2$, an amount of terminal methyl group of 0 equivalent/ton, a titanium oxide content of 0.05% by mass, and an amount of surface epoxy group (epoxy index) of $0.1 \times 10^{-3}$ equivalent/kg.

Here, the above polyester fiber, the intrinsic viscosity, the strength and degree of elongation, the dry heat shrinkage, the amount of terminal carboxy group, the long period and crystal size in the fiber lateral axis direction according to small-angle X-ray diffraction, the amount of terminal carboxy group on the fiber surface, the amount of terminal methyl group, the titanium oxide content, and the amount of surface epoxy group were each measured in accordance with the following description. The same applies hereinafter.

(Intrinsic viscosity)

A diluted solution in which a polyester chip and a polyester fiber were dissolved in orthochlorophenol at 100°C for 60 minutes was measured, and then the intrinsic viscosity thereof was calculated on the basis of the measured value using a Ubbelohde viscometer at 35°C.

(Amount of terminal carboxy group)

40.00 g of a polyester sample powderized by using a pulverizer and 100 ml of benzyl alcohol were added into a flask, and then, the polyester sample was dissolved in the benzyl alcohol under nitrogen flow at 215±1°C for 4 minutes. After dissolution, the sample solution was cooled to a room temperature, then an appropriate amount of 0.1% by mass solution of benzyl alcohol in phenol red was added, a rapid titration was performed with N normality of benzyl alcohol solution of sodium hydroxide to obtain the amount of titration till the color changed as A ml. As a blank, the same amount of 0.1% by mass solution of benzyl alcohol in phenol red was added to 100 ml of benzyl alcohol, and a rapid titration was performed with N normality of benzyl alcohol solution of sodium hydroxide to obtain the amount of titration till the color changed as B ml. Using these values, the terminal COOH group content in the polyester sample was calculated by the following expression.

$$\text{terminal COOH group content } (\text{eq}/10^0\text{g}) = (A-B) \times 10^3 \times N \times 10^6/40$$

Note that the benzyl alcohol used herein was those obtained by distilling a special grade reagent and stored in a light shielding bottle. As the N normality of benzyl alcohol solution of sodium hydroxide, a solution having normality N which had been precisely determined by conventional titration by a sulfuric acid solution having an already-known concentration was used.

(Amount of terminal methyl group)

After hydrolyzing a polyester into an acid component and a glycol component, a methyl ester component was quantitated by gas chromatography, then the amount of terminal methyl group was calculated using this value.

(Titanium oxide content)

The content of each element was measured by an X-ray fluorescence spectrometer (manufactured by Rigaku Corporation, 3270E type) to perform a quantitative analysis. During this fluorescent X-ray analysis, a polyester fiber resin polymer sample was heated in a compression press machine for 2 minutes at 260°C under a pressuring condition of 7 MPa to manufacture a test formed product having a plane surface to perform measurement.

(X-ray Diffraction)

X-ray diffraction for polyester composition and fiber was performed by using an X-ray diffraction apparatus (manufactured by Rigaku Corporation, RINT-TTR3, Cu-Kα ray, tube voltage 50 kV, current 300 mA, parallel beam method). The long period interval was calculated by using a small-angle X-ray scattering measurement device and using a conventionally known method, in other words, by using a diffraction line of a meridian interference obtained by the irradiation of Cu-Kα ray having a wavelength of 1.54 A as a beam source to a fiber axis at a right angle, and by using the Bragg's equation. The crystal size was determined by the full width at half maximum of (010) (100) strength distribution curve of equator scanning from X-ray wide angle diffraction by using the Scherrer equation.

(Amount of terminal carboxy group on fiber surface)

In accordance with JIS K0070-3.1 neutralization titration, the amount of carboxy group (acid value) on the fiber surface was determined. Specifically, 50 ml of diethyl ether/ethanol=1/1 solution was added to about 5 g of a fiber sample, few droplets of phenolphthalein solution were added as an indicator, and ultrasonic shaking was performed at a room temperature for 15 minutes. This solution was titrated with 0.1 ml of a potassium hydroxide ethanol solution (factor value f = 1.030), measurement of the dropping amount of the indicator till the terminal point until which pale red color continued for 30 seconds was performed, and the acid value was calculated by the following formula:

$$\text{acid value A (eq/ton)} = (\text{B} \times 1.030 \times 100)/S$$

(wherein B represents the dropping amount of 0.1 ml potassium hydroxide ethanol solution (ml), and S represents the amount of the sample (g)).

(Strength and degree of elongation of fiber)

The strength and the degree of elongation of a fiber was measured by using a tensile load measuring instrument (manufactured by Shimadzu Corporation, Autograph) in accordance with JIS L-1013.

(Dry heat shrinkage percentage)

In accordance with JIS-L1013, the fiber was left to stand still in a room where the temperature and the humidity were controlled at 20°C and 65% RH, respectively, for 24 hours, then subjected to a heat treatment of 180°C × 30 minutes under no load in a drying machine, and the dry heat shrinkage percentage was calculated by the difference between the length of the fiber before the heat treatment and that after the treatment.

(Epoxy index (EI))

As to the polyester fiber after a heating treatment, an epoxy index (EI: epoxy equivalent number per 1 kg of fiber) was measured in accordance with JIS K-7236.

By using a polyester filament made of the polyester fiber as obtained above on which an epoxy pretreatment had been performed, a rubber-cord composite body was prepared in a manner similar to above example 1, etc. except that those indicated below were used as an adhesive agent used in the adhesive agent treatment, and a sample tire of each example and comparative example was manufactured.

Table 4

| | Comparative example 9 | Comparative example 10 | Comparative example 11 | Comparative example 12 | Comparative example 13 | Comparative example 14 | Example 26 | Comparative Example | Example 28 | Comparative Example | Example 30 | Example 31 | Comparative Example |
|---|---|---|---|---|---|---|---|---|---|---|---|---|---|
| Expression (1) value | 3.2 | 0.05 | 1.5 | 3.3 | 0.02 | 2.3 | 2.5 | 2.5 | 0.1 | 0.1 | 2.0 | 1.4 | 0.2 |
| Expression (2) value | 0.95 | 0.99 | 0.98 | 0.15 | 0.5 | 0.9 | 0.9 | 0.05 | 0.9 | 0.1 | 0.4 | 0.9 | 0.2 |
| Carcass cord material | Pretreated PET | Pretreated PET | Pretreated PET | Pretreated PET | Pretreated PET | Pretreated PET | Pretreated PET | Pretreated PET | Pretreated PET | Pretreated PET | Pretreated PET | Pretreated PET | Pretreated PET |
| Adhesive agent*1 | A | A | A | A | A | A | B | B | B | B | B | B | B |
| Ply end structure *2 | A | A | A | A | A | A | A | A | A | A | A | A | A |
| Adhesive property (N/cord) | 11 | 11 | 11 | 11 | 11 | 11 | 18 | 18 | 18 | 18 | 18 | 18 | 18 |
| Run-flat durability (Index) | 100 | 90 | 98 | 88 | 87 | 102 | 101 | 101 | 102 | 103 | 103 | 105 | 110 |
| Drum durability (Index) | 100 | 98 | 100 | 99 | 100 | 101 | 105 | 107 | 104 | 106 | 108 | 108 | 112 |

Table 5

| | Example 33 | Example 34 | Example 35 | Comparative Example | Example 37 | Comparative Example | Example 39 | Example 40 | Example 41 | Camparative Example |
|---|---|---|---|---|---|---|---|---|---|---|
| Expression (1) value | 0.2 | 1.5 | 1.4 | 1.5 | 2.5 | 0.8 | 2.4 | 1.3 | 0.2 | 0.2 |
| Expression (2) value | 0.8 | 0.8 | 0.5 | 0.2 | 0.9 | 0.1 | 0.9 | 0.5 | 0.7 | 0 |
| Carcass cord material | Pretreated PET | Pretreated PET | Pretreated PET | Pretreated PET | Pretreated PET | Pretreated PET | Pretreated PET | Pretreated PET | Pretreated PET | Pretreated PET |
| Adhesive agent*1 | B | B | B | B | B | B | B | B | B | B |
| Ply end structure*2 | A | A | A | C | C | C | C | C | C | C |
| Adhesive property (N/cord) | 18 | 18 | 18 | 18 | 18 | 18 | 18 | 18 | 18 | 18 |
| Run-flat durability (Index) | 112 | 115 | 116 | 115 | 110 | 118 | 112 | 115 | 116 | 115 |
| Drum durability (Index) | 111 | 111 | 115 | 112 | 118 | 121 | 123 | 126 | 124 | 117 |

As indicated in the above tables, the sample tire of each example, in which the reinforcing cord of the carcass ply is made of a polyester fiber or a aramid fiber and subjected to a predetermined adhesion treatment, and, in the cross section in the tire width direction, the ratios of the areas of the side reinforcing rubber, bead filler, and rubber chafer are set to satisfy the predetermined relations defined by the expressions (1) and (2), has been confirmed to have improved, as a whole, in adhesion property, run-flat durability, and drum durability in comparison with the sample tires of comparative examples which fail to satisfy the above relations.

DESCRIPTION OF SYMBOLS

1 bead core, 2 carcass (carcass ply), 3 belt layer, 4 side reinforcing rubber, 5 bead filler, 6 rubber chafer, 7 protrusion portion for turbulent flow generation, 7A apex portion, 11 bead portion, 12 side wall portion, 13 tread portion

## Claims

1. A pneumatic safety tire comprising: as a skeleton, a carcass (2) having at least one carcass ply extending between a pair of bead cores (1) embedded in a corresponding pair of bead portions (11); and a side reinforcing rubber (4) on a tire width direction inner side of the carcass (2) in a side wall portion (12); wherein a reinforcing cord of the carcass ply is composed of a polyester fiber and/or an aramid fiber, and subjected to an adhesive agent treatment in which an adhesive agent containing at least one of a thermoplastic polymer (A), a heat reactive aqueous urethane resin (B), and an epoxide compound (C) is used as a first bath treatment liquid, and a resorcin-formalin-latex-based adhesive agent is used as a second bath treatment liquid, and a principal chain of the thermoplastic polymer (A) substantially fails to include a double bond between carbons having an addition reactivity, is composed of an ethylene addition polymer and/or a urethane-based high molecular weight polymer, each of which is composed mostly of a linear chain structure, and includes at least one cross-linkable functional group as a pendant group,
**characterised in that**, in a cross section in a tire width direction, provided that the area of the side reinforcing rubber (4) is S1, the area of the bead filler (5) arranged on a tire radial direction outer side of the bead core (1) is S2, and the area of a rubber chafer (6) arranged on a tire width direction outer side of the bead filler (5) and the bead core (1) is S3, the following expressions (1) and (II) are satisfied:

$$0.10 \leq (S2 + S3)/S1 \leq 2.50 \quad \text{(I)}$$

$$0.3 \leq S2/(S2 + S3) \leq 0.9 \quad \text{(II).}$$

2. The pneumatic safety tire according to claim 1, satisfying the following expressions (III) and (IV):

$$0.20 \leq (S2 + S3)/S1 \leq 1.50 \quad \text{(III)}$$

$$S2/(S2 + S3) \leq 0.80 \quad \text{(IV).}$$

3. The pneumatic safety tire according to claim 1, wherein an adhesive strength of the reinforcing cord of the carcass ply (2) is 12 N or more per cord.

4. The pneumatic safety tire according to claim 1, wherein the carcass ply (2) is folded back around the bead core (1) from the inside to the outside of the tire, and an folded-back end portion of the carcass ply (2) is located on a tire radial direction inner side with respect to a maximum thickness portion of the side reinforcing rubber (4).

5. The pneumatic safety tire according to claim 1, wherein a height of the bead filler (5) is 15 mm or less.

6. The pneumatic safety tire according to claim 1, wherein the carcass ply is folded back around the bead core (1) from the inside to the outside of the tire, and an folded-back end portion of the carcass ply (2) is located at a height of 30 mm or less from a center of the bead core (1).

7. The pneumatic safety tire according to claim 1, wherein the reinforcing cord of the carcass ply (2) is composed of a polyester fiber, and an intermediate elongation of the reinforcing cord, which is taken out from a product tire, of the carcass ply (2) in a crown portion under 66 N falls within 3.5 to 6.5%.

8. The pneumatic safety tire according to claim 1, wherein the reinforcing cord of the carcass ply (2) is composed of an aramid fiber, and an intermediate elongation of the reinforcing cord, which is taken out from a product tire, of the carcass ply (2) in a crown portion under 66 N falls within 0.5 to 2.5%.

9. The pneumatic safety tire according to claim 1, wherein the cross-linkable functional group as the pendant group is at least one of an oxazoline group, a bismaleimide group, an isocyanate group, an aziridine group, a carbodiimide group, a hydrazino group, an epoxy group, and an epithio group.

10. The pneumatic safety tire according to claim 9, wherein the cross-linkable functional group as the pendant group is the oxazoline group.

11. The pneumatic safety tire according to claim 1, wherein the reinforcing cord of the carcass ply (2) is composed of a fiber of polyester in which a primary repeating unit is ethylene terephthalate and an intrinsic viscosity is 0.85 or more, an amount of terminal carboxy group in the fiber is 20 equivalent/ton or more, a long period according to small-angle X-ray diffraction is 9 to 12 nm, and a surface treatment agent having an epoxy group is attached to a surface of the fiber.

## Patentansprüche

1. Sicherheitsluftreifen, umfassend: als Skelett eine Karkasse (2) mit mindestens einer Karkassenlage, die sich zwischen einem Paar Wulstkernen (1) erstreckt, die in ein entsprechendes Paar Wulstabschnitte (11) eingebettet sind; und einen seitlichen Verstärkungsgummi (4) auf einer in Reifenbreitenrichtung verlaufenden Innenseite der Karkasse (2) in einem Seitenwandabschnitt (12);
wobei ein Armierungscord der Karkassenlage aus einer Polyesterfaser und/oder einer Aramidfaser zusammengesetzt und einer Haftmittelbehandlung unterzogen ist, bei der ein Haftmittel, das mindestens eines aus einem thermoplastischen Polymer (A), einem hitzereaktiven wässrigen Urethanharz (B) und einer Epoxidverbindung (C) enthält, als erste Badbehandlungsflüssigkeit verwendet wird, und ein auf Resorcin-Formalin-Latex basiertes Haftmittel als zweite Badbehandlungsflüssigkeit verwendet wird, und eine Hauptkette des thermoplastischen Polymers (A) im Wesentlichen keine Doppelbindung zwischen Kohlenstoffen mit einer Additionsreaktivität beinhaltet, aus einem Ethylenadditionspolymer und/oder einem hochmolekularen Polymer auf Urethanbasis besteht, von denen jedes hauptsächlich aus einer linearen Kettenstruktur besteht, und mindestens eine vernetzbare funktionelle Gruppe als Seitengruppe beinhaltet,
**dadurch gekennzeichnet, dass**
in einem Querschnitt in einer Reifenbreitenrichtung, vorausgesetzt, dass die Fläche des seitlichen Verstärkungsgummis (4) S1 ist, die Fläche des Wulstfüllers (5), der auf einer Außenseite des Wulstkerns (1) in radialer Reifenrichtung angeordnet ist, S2 ist, und die Fläche eines Gummiwulstschutzbandes (6), das auf einer Außenseite des Wulstfüllers (5) in Reifenbreitenrichtung angeordnet ist, und der Wulstkern (1) S3 ist, die folgenden Ausdrücke (I) und (II) erfüllt werden:

$$0{,}10 \le (S2 + S3)/S1 \le 2{,}50 \qquad (I)$$

$$0{,}3 \le S2/(S2 + S3) \le 0{,}9 \qquad (II).$$

2. Sicherheitsluftreifen nach Anspruch 1, der die folgenden Ausdrücke (III) und (IV) erfüllt:

$$0{,}20 \le (S2 + S3)/S1 \le 1{,}50 \qquad (III)$$

$$S2/(S2 + S3) \le 0{,}80 \qquad (IV).$$

3. Sicherheitsluftreifen nach Anspruch 1, wobei eine Haftfestigkeit des Armierungscords der Karkassenlage (2) 12 N oder mehr pro Cord beträgt.

4. Sicherheitsluftreifen nach Anspruch 1, wobei die Karkassenlage (2) um den Wulstkern (1) von der Innenseite zur Außenseite des Reifens zurückgefaltet ist, und ein zurückgefalteter Endabschnitt der Karkassenlage (2) auf einer Innenseite der Reifenradialrichtung in Bezug auf einen maximalen Dickenabschnitt des seitlichen Verstärkungsgummis (4) angeordnet ist.

5. Sicherheitsluftreifen nach Anspruch 1, wobei eine Höhe des Wulstfüllers (5) 15 mm oder weniger beträgt.

6. Luftsicherheitsreifen nach Anspruch 1, wobei die Karkassenlage um den Wulstkern (1) von der Innenseite zur Außenseite des Reifens zurückgefaltet ist, und ein zurückgefalteter Endabschnitt der Karkassenlage (2) in einer Höhe von 30 mm oder weniger von einer Mitte des Wulstkerns (1) angeordnet ist.

7. Sicherheitsluftreifen nach Anspruch 1, wobei der Armierungscord der Karkassenlage (2) aus einer Polyesterfaser besteht und eine Zwischendehnung des aus einem Produktreifen entnommenen Armierungscords der Karkassenlage (2) in einem Kronenabschnitt unter 66 N zwischen 3,5 und 6,5 % beträgt.

8. Sicherheitsluftreifen nach Anspruch 1, wobei der Armierungscord der Karkassenlage (2) aus einer Aramidfaser besteht und eine Zwischendehnung des aus einem Produktreifen entnommenen Armierungscords der Karkassenlage (2) in einem Kronenabschnitt unter 66 N zwischen 0,5 und 2,5 % beträgt.

9. Sicherheitsluftreifen nach Anspruch 1, wobei die vernetzbare funktionelle Gruppe als Seitengruppe mindestens eine aus einer Oxazolingruppe, einer Bismaleimidgruppe, einer Isocyanatgruppe, einer Aziridingruppe, einer Carbodiimidgruppe, einer Hydrazingruppe, einer Epoxygruppe und einer Epithiogruppe ist.

10. Sicherheitsluftreifen nach Anspruch 9, wobei die vernetzbare funktionelle Gruppe als Seitengruppe die Oxazolingruppe ist.

11. Sicherheitsluftreifen nach Anspruch 1, wobei der Armierungscord der Karkassenlage (2) aus einer Polyesterfaser besteht, in der eine primäre Wiederholungseinheit Ethylenterephthalat ist und eine intrinsische Viskosität 0,85 oder mehr beträgt, eine Menge an endständiger Carboxygruppe in der Faser 20 Äquivalent/Tonne oder mehr beträgt, eine lange Periode nach der Röntgenkleinwinkelbeugung 9 bis 12 nm beträgt und ein Oberflächenbehandlungsmittel mit einer Epoxygruppe an eine Oberfläche der Faser gebunden ist.

## Revendications

1. Pneumatique de sécurité comprenant : en guise de squelette, une carcasse (2) ayant au moins une nappe de carcasse s'étendant entre une paire de tringles de talon (1) intégrées dans une paire correspondante de parties de talon (11) ; et un caoutchouc de renfort latéral (4) sur un côté interne en sens largeur de pneu de la carcasse (2) dans une partie de paroi latérale (12) ;
dans lequel un câble de renfort de la nappe de carcasse est composé d'une fibre polyester et/ou d'une fibre aramide, et est soumis à un traitement par agent adhésif dans lequel un agent adhésif contenant au moins l'un parmi un polymère thermoplastique (A), une résine uréthane aqueuse thermoréactive (B) et un composé époxyde (C) est utilisé en guise de liquide de traitement de premier bain, et un agent adhésif à base de résorcine-formol-latex est utilisé en guise de liquide de traitement de deuxième bain, et une chaîne principale du polymère thermoplastique (A) ne renferme essentiellement pas de double liaison entre des carbones ayant une réactivité d'addition, est composée d'un polymère d'addition éthylène et/ou d'un polymère à masse moléculaire élevée à base d'uréthane, dont chacun est composé principalement d'une structure de chaîne linéaire, et inclut au moins un groupe fonctionnel réticulable en guise de groupe greffé,
**caractérisé en ce que,**
dans une section transversale dans un sens largeur de pneu, étant entendu que l'aire du caoutchouc de renfort latéral (4) est S1, l'aire du bourrage sur tringle (5) agencé sur un côté externe en sens radial de pneu de la tringle de talon (1) est S2, et que l'aire d'une bandelette talon de caoutchouc (6) agencée sur un côté externe en sens largeur de pneu du bourrage sur tringle (5) et de la tringle de talon (1) est S3, les expressions (I) et (II) suivantes sont satisfaites :

$$0,10 \leq (S2 + S3)/S1 \leq 2,50 \qquad (I)$$

$$0,3 \leq S2/(S2 + S3) \leq 0,9 \qquad (II).$$

**2.** Pneumatique de sécurité selon la revendication 1, satisfaisant les expressions (III) et (IV) suivantes :

$$0,20 \leq (S2 + S3)/S1 \leq 1,50 \qquad (III)$$

$$S2/(S2 + S3) \leq 0,80 \qquad (IV).$$

**3.** Pneumatique de sécurité selon la revendication 1, dans lequel la résistance adhésive du câble de renfort de la nappe de carcasse (2) est de 12 N ou plus par câble.

**4.** Pneumatique de sécurité selon la revendication 1, dans lequel la nappe de carcasse (2) est repliée autour de la tringle de talon (1) de l'intérieur vers l'extérieur du pneu, et une partie d'extrémité repliée de la nappe de carcasse (2) est située sur un côté interne dans la direction radiale de pneu par rapport à une partie d'épaisseur maximale du caoutchouc de renfort latéral (4).

**5.** Pneumatique de sécurité selon la revendication 1, dans lequel une hauteur du bourrage sur tringle (5) est de 15 mm ou moins.

**6.** Pneumatique de sécurité selon la revendication 1, dans lequel la nappe de carcasse est repliée autour de la tringle de talon (1) de l'intérieur vers l'extérieur du pneu, et une partie d'extrémité repliée de la nappe de carcasse (2) est située à une hauteur de 30 mm ou moins à partir d'un centre de la tringle de talon (1).

**7.** Pneumatique de sécurité selon la revendication 1, dans lequel le câble de renfort de la nappe de carcasse (2) est composé d'une fibre polyester, et un allongement intermédiaire du câble de renfort, qui est pris à partir d'un pneu produit, de la nappe de carcasse (2) dans une partie de couronne sous 66 N descend à une valeur allant de 3,5 à 6,5 %.

**8.** Pneumatique de sécurité selon la revendication 1, dans lequel le câble de renfort de la nappe de carcasse (2) est composé d'une fibre aramide, et un allongement intermédiaire du câble de renfort, qui est pris à partir d'un pneu produit, de la nappe de carcasse (2) dans une partie de couronne sous 66 N descend à une valeur allant de 0,5 à 2,5 %.

**9.** Pneumatique de sécurité selon la revendication 1, dans lequel le groupe fonctionnel réticulable en guise de groupe greffé est au moins l'un parmi un groupe oxazoline, un groupe bismaléimide, un groupe isocyanate, un groupe aziridine, un groupe carbodiimide, un groupe hydrazino, un groupe époxy, et un groupe épithio.

**10.** Pneumatique de sécurité selon la revendication 9, dans lequel le groupe fonctionnel réticulable en guise de groupe greffé est le groupe oxazoline.

**11.** Pneumatique de sécurité selon la revendication 1, dans lequel le câble de renfort de la nappe de carcasse (2) est composé d'une fibre de polyester dans laquelle un motif de répétition primaire est téréphtalate d'éthylène et une viscosité intrinsèque est de 0,85 ou plus, une quantité de groupe carboxy terminal dans la fibre est de 20 équivalents/tonne ou plus, une période longue selon diffraction des rayons X à petit angle va de 9 à 12 nm, et un agent de traitement de surface ayant un groupe époxy est fixé à une surface de la fibre.

[Fig.1]

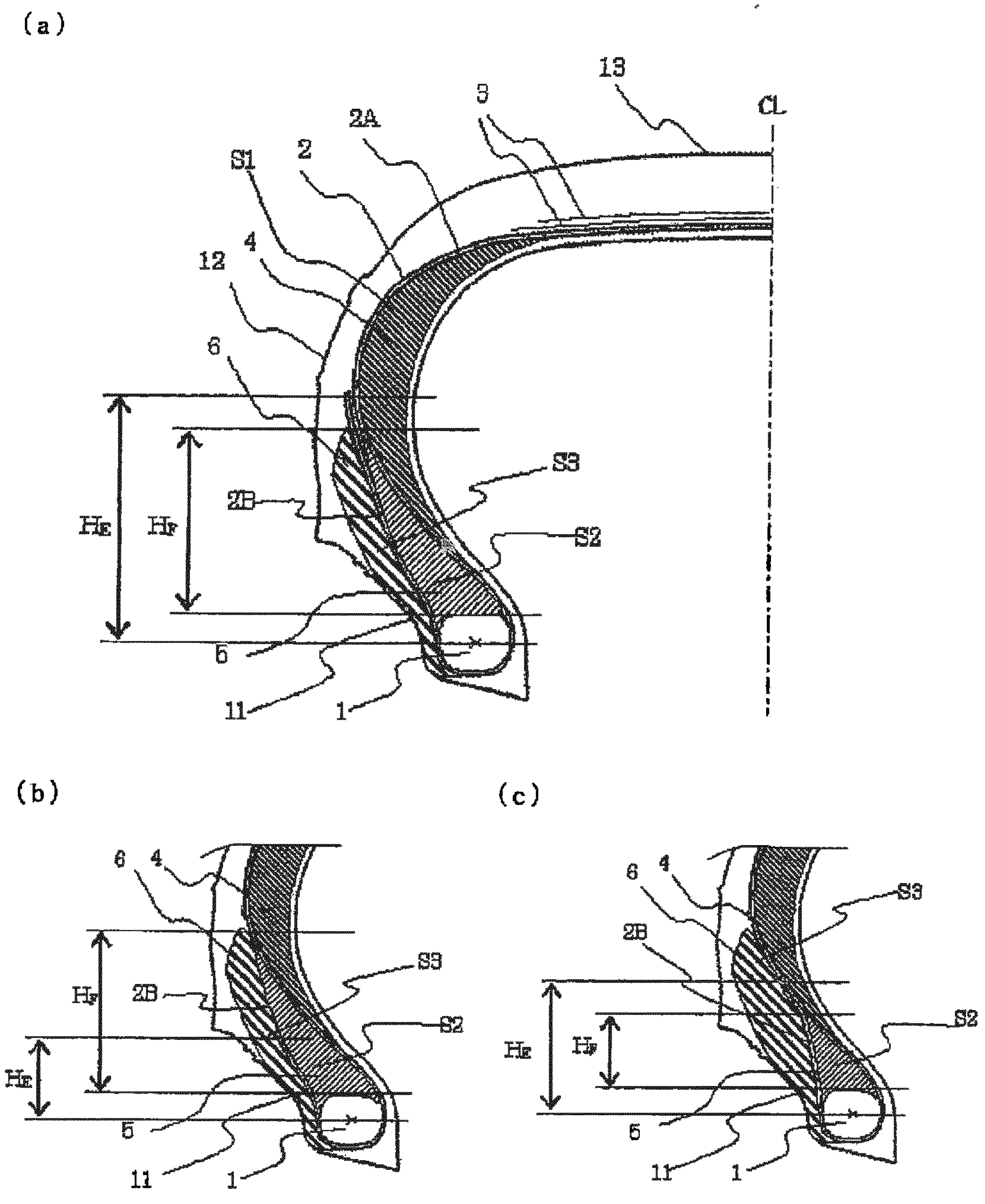
(a)
13
CL
3
2A
S1
2
4
12
6
$H_E$
$H_F$
2B
S3
S2
5
11
1
(b)
6
4
$H_F$
2B
S3
S2
$H_E$
5
11
1
(c)
6
4
S3
2B
S2
$H_E$
$H_F$
5
11
1

[Fig. 2]

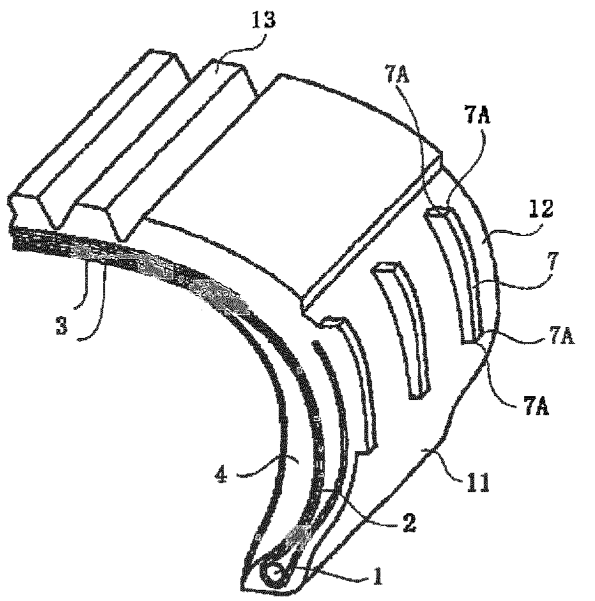


[Fig.3]

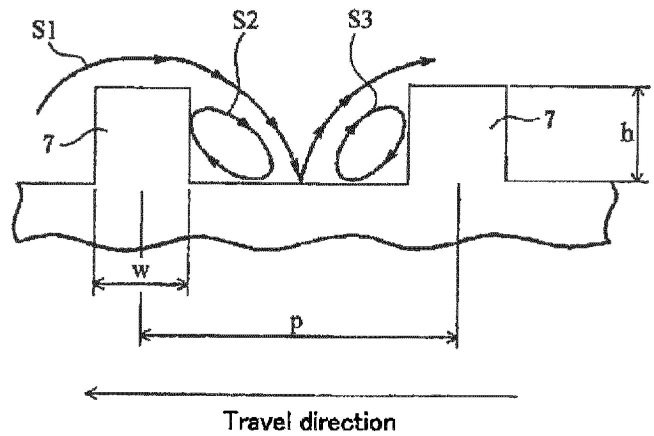


[Fig.4]

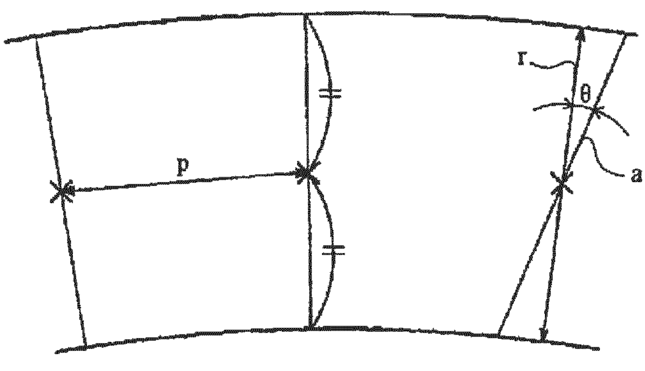

[Fig.5]

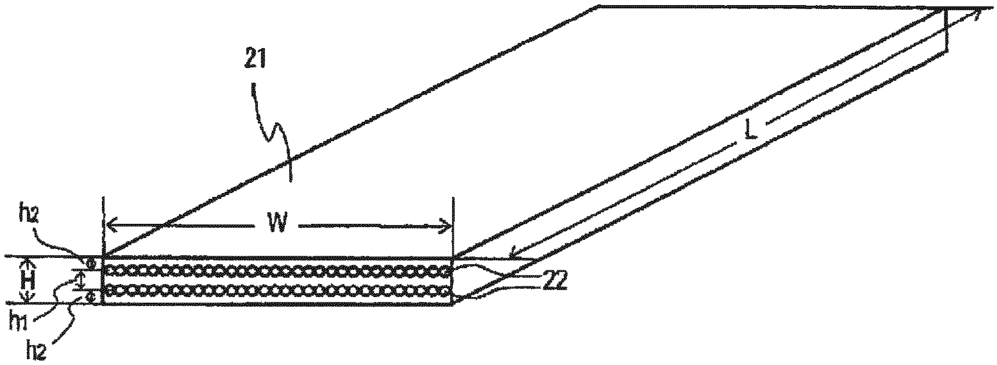


[Fig.6]

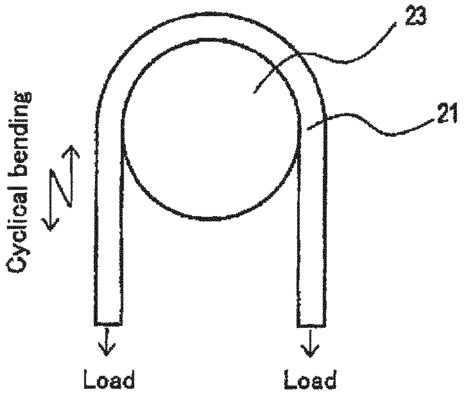

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012214136 A
- JP 20121108 A
- JP 2012162230 A
- JP 20120830 A
- JP 2012014861 A
- JP 20120809 A
- JP 2000355875 A